# EUROPEAN PATENT APPLICATION

(11) **EP 3 330 363 A1**
(43) Date of publication of application: **06.06.2018**
(21) Application number: 16201532.5
(22) Date of filing: 30.11.2016
(51) Int. Cl.: C12G 3/08, C12C 11/11, C12G 3/14

(54) **PROCESS FOR THE PRODUCTION OF A BEER OR CIDER CONCENTRATE**

(71) Applicant: Anheuser-Busch InBev S.A., 1000 Brussels (BE)
(72) Inventor: The designation of the inventor has not yet been filed
(74) Representative: BiiP cvba

(57) **Abstract**

A method for preparing beer concentrate, comprising the steps of:
a) Subjecting beer or cider (1) to a first concentration step comprising reverse osmosis to obtain a retentate (2) and a fraction comprising alcohol and volatile flavour components (3), wherein the retentate (2) is characterised by the concentration of unfilterable compounds equal to or higher than 5% (w/w), preferably 10% (w/w), most preferably 15% (w/w), as calculated from density measurement corrected for the alcohol amount;
b) Subjecting the retentate (2) to a retentate concentration step comprising nanofiltration to obtain a concentrated retentate (2) and a permeate comprising alcohol and volatile flavour components.

## Description

### TECHNICAL FIELD

The present invention concerns a method for preparing beer or cider concentrate comprising alcohol and flavour components, and further beer or cider, respectively prepared therefrom. In particular the invention concerns a two-step concentration method wherein the first step involves a reverse-osmosis that results in a concentrated retentate and an aqueous permeate fraction comprising alcohol and volatile flavour components, and wherein the second step involves a further concentration of the retentate by a nanofiltration process allowing obtaining a highly concentrated extract fraction.

### BACKGROUND OF THE INVENTION

The major benefit of producing concentrates is the reduction in weight and volume which allows to save on storage and transportation costs, in addition to also often having favourable effect on improving shelf life of a product. Since beers and many other alcoholic beverages in general contain about 80 to 90% water, it has naturally been recognised that the most economical way to store or distribute them over considerable distances would be in the form of a concentrate.

In principle, a concentrate can be reconstituted to the initial product at any place at and time by the addition of the solvent, usually water. Nevertheless, it is not straightforward to produce a beer or cider like beverage concentrate, the main difficulty lying in the fact that most concentration procedures lead to reduction in many flavour or aroma components. Beer in particular is a very challenging beverage to produce a concentrate from because, unlike beverages produced from fruit juice fermentation such as wine or perry; the aromas present in beer are subtler and much less concentrated, which means that losing even a small portion of them at the concentration stage will have a profound effect on the organoleptic perception of the final rehydrated product. In addition, because of the great popularity of the drink and existence of a wide public of demanding beer aficionados, the reconstituted drink is expected to meet expectations with regard to its distinctive aroma, taste, mouthfeel, foaming properties, colour, and even haze perception. Reconstituted beer simply cannot taste like a diluted beer missing some characteristics; for gaining consumer acceptance it simply must have all the qualities of the "real" unprocessed beer.

Methods for producing beer concentrates and then rehydrating them into final beverages are known in the art. Various methods for concentrating alcoholic beverages that are known in the brewing industry include such processes as freeze-drying, reverse osmosis, and filtration. All of these methods start with a substantially finished beer and then remove the water. The resulting concentrated beverages can then be transported more cost-effectively and then reconstituted at a final destination by addition of water, carbon dioxide, and alternatively also alcohol.

An example of one method for preparation of a reconstitutable beer concentrate can be found in GB2133418. The method is based on subjecting beer to reverse osmosis and results in a low alcohol concentrate which can be rehydrated to a low-alcohol beer.

Conversely, US4265920 and US4532140 teach two-step methods for obtaining a high-alcohol beer concentrate that can be reconstituted to beers of normal alcohol content. The method of US4265920 comprises a first distillation step to separate ethanol and volatile aroma components from the retentate comprising the rest of the beer components, which is followed by a second step comprising a rather costly freeze-concentration procedure to concentrate the retentate from the first step. Finally, the distilled ethanol from step 1 is combined with the freeze-concentrated retentate from step 2, resulting in the final ethanol-enriched beer concentrate. The method of US4532140, on the other hand, in the first step subjects beer to ultrafiltration to obtain a concentrated retentate and an aqueous permeate that is then, in the second step subjected to reverse osmosis t concentrate ethanol and volatile compounds; lastly, the alcohol fraction from step 2 is pulled with the retentate from step 1 to obtain the final beer concentrate.

Although at least some of the above described methods provide a general approach for concentrating beer including its alcohol content and, to some extent, volatile components, they achieve their goal at the cost of reaching high concentration factors and only provide final concentrates of a volume half or at most one third of the volume of the starting beer. Therefore, there clearly exists place for improvement and provision of more concentrated beer bases providing further reduction in transport and storage costs.

The present invention provides a method for producing a naturally alcohol-enriched beer concentrate of high density, said method providing an advantageous concentration factor potential of at least 5, 10, 15, up to 20 or more, while at the same time ensuring high and optionally selective retention of natural beer flavouring compounds, including the volatile ones. These and other advantages of the present invention are presented in continuation.

### SUMMARY OF THE INVENTION

The present invention is defined in the appended independent claims. Preferred embodiments are defined in the dependent claims. In particular, the present invention concerns a method for preparing beer concentrate, comprising the steps of:
a) Subjecting beer or cider (1) to a first concentration step comprising reverse osmosis to obtain a retentate (2) and a fraction comprising alcohol and volatile flavour components (3), wherein the retentate (2) is characterised by the concentration of unfilterable compounds equal to or higher than 5% (w/w), preferably 10% (w/w), most preferably 15% (w/w), as calculated from density measurement corrected for the alcohol amount;
b) Subjecting the retentate (2) to a retentate concentration step (RC) comprising nanofiltration to obtain a concentrated retentate (4) and a permeate (5) comprising alcohol and volatile flavour components.

Preferably at least part of the permeate obtained in the retentate concentration step (RC) is recirculated to the feed of the first concentration step to limit losses of volatile flavour components.

The fraction (3) comprising alcohol and volatile flavour components obtained from the reverse osmosis is preferably fed to a concentration step B) allowing recovery of volatile flavour components, such recovery step can for example comprise freeze concentration, fractionation, reverse osmosis (with a membrane having a smaller mesh size than the reverse osmosis membrane of the first concentration step), adsorption and/or combinations of the above concentration steps. Potentially the permeate of the nanofiltration can be subjected to the same concentration steps to allow recovery of the volatile flavour components therein.

At least part of the fraction (7) comprising volatile flavour components obtained from process steps B) is preferably added to the retentate (4) of the nanofiltration step.

The present invention also concerns the use of a fraction comprising volatile flavour components or of a concentrated fraction comprising volatile flavour components obtained by a method as identified above as an ingredient for beer or cider, as a component in beer or cider reconstitution or as a flavour component to be added to a beer or cider.

### BRIEF DESCRIPTION OF THE FIGURES

For a fuller understanding of the nature of the present invention, reference is made to the following detailed description taken in conjunction with the accompanying drawings in which:

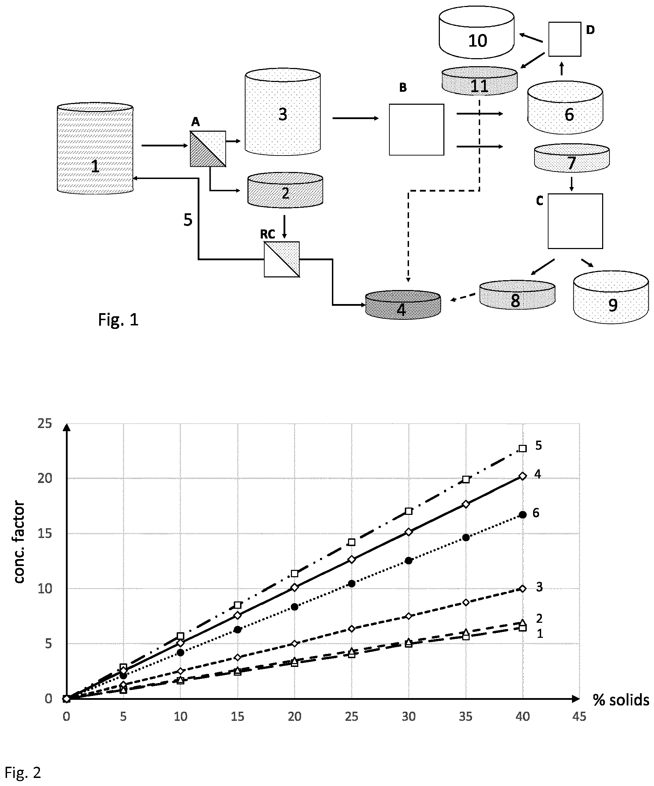

**Figure 1****:** shows a block diagram schematically illustrating key steps of the method according to the present invention. A - first concentration step comprising reverse osmosis; RC - retentate concentration step by nanofiltration; B - second concentration step comprising freeze concentration, fractionation or adsorption; C - a third method step comprising adsorption; D - a fourth method step comprising freeze concentration 1 - beer subjected to reverse osmosis; 2 - retentate; 3 - permeate comprising ethanol and volatile aroma components; 4 - retentate of the nanofiltration; 5 - permeate of the nanofiltration; 6 - left over fraction of the second concentration step B); 7 - concentrated fraction comprising volatile flavour components; 8 - concentrated fraction comprising volatile flavour components after adsorption step C); 9 - left over fraction of the adsorption step C); 10 - left over fraction of the freeze concentration step D); 11 - concentrated extract fraction of the freeze concentration step D).
**Figure 2****:** shows a graph illustrating the relationship between the concentration factors of different retentates (4) obtained from different beers (beer 1-4), and the amount of unfilterable compounds ("% solids") achieved is said retentates following the first concentration step and retentate concentration step (RC) according to the method of the invention.

### DEFINITIONS

As used herein, the term ***"concentrate"*** is given the definition of Oxford dictionary: "A *substance made by removing or reducing the diluting agent; a concentrated form of something"* (cf. http://www.oxforddictionaries.com/definition/english/concentrate). In line with this, the term *"beer* or cider *concentrate"* or, alternatively *"(concentrated) beer or cider base"* or *"beer or cider syrup",* is meant to relate to beer or cider, respectively which had the majority of its solvent component - i.e. water - removed, while retaining most of the dissolved components conferring such features as taste, smell, colour, mouthfeel etc.

As used herein, the term *"beer"* is to be construed according to a rather broad definition:
*"the drink obtained by fermenting from a wort, prepared with starchy or sugary raw materials, including hop powder or hop extracts and drinkable water. Aside from barley malt and wheat malt, only the following may be considered for brewing, mixed with e.g. wheat malt, starchy or sugary raw materials in which the total quantity may not exceed 80%, preferably 40% of the total weight of the starchy or sugary raw materials:*
   *(a) maize, rice, sugar, wheat, barley and the various forms of them.*
   *(b) saccharose, converted sugar, dextrose and glucose syrup.*
Although according to certain national legislations, not all fermented malt-based beverages can be called beer, in the context of the present invention, the term *"beer"* and *"fermented malt based beverage"* are used herein as synonyms and can be interchanged. It follows, that as used herein the terms *"reconstituted beer"* and *"reconstituted fermented malt based beverage"* are to be understood as beverages composition-wise substantially identical to beer but obtained by addition of the solvent, i.e. water or carbonated water, to a previously prepared beer concentrate.

Next, as used herein, the term ***"cider"*** is to be understood as every alcoholic beverage resulting from the fermentation of apple juice or apple juice mixed with up to 10% pear juice. This term also encompasses the any product of this fermented apple juice further modified by adding such standard cider manufacturing additives as acids (citric or tartaric) and/or sugar, filtering, cooling, saturating with carbon dioxide, pasteurizing, etc., which is commercialized under the term cider.

As used herein, the term ***"unfilterable compounds"*** is to be understood as referring to all the diverse compounds comprised in any type of beer or cider, which cannot pass through a **nanofiltration** membrane, i.e. beer compounds having the mean size greater than 150 Da, 180 Da, or 200 Da, which is the molecular weight retention size cut-off depending on a given nanofiltration membrane. As opposed to the *"filterable compounds"* comprising water, monovalent and some bivalent ions, low molecular alcohols such as ethanol, low molecular esters and a number of volatile flavour components, the unfilterable compounds mainly include sugars, mostly polysaccharides; sugar alcohols, polyphenols, pentosans, peptides and proteins, high molecular weight alcohols, high molecular weight esters, partially multivalent ions, and many other mainly organic and highly divergent compounds that vary depending on the beer or cider type. Due the complexity and discrepancies between different beer or cider compositions, the collective concentration of the unfilterable compounds is often referred to (in great simplification and without being exact) as "concentration of sugars" or "concentration of solids" and can be easily calculated from mass balance considerations taking into account of parameters such as density, viscosity, beer rheology, original gravity or extract, real gravity or extract, degree of fermentation (RDF) and/or alcohol content. In brewing practice, the concentration of unfilterable compounds is routinely estimated from density (real extract) measurement corrected for the density of the measured ethanol amount, ethanol being the most prevalent compound of density < 1 g/cm³ and therefore affecting the density measurement most substantially. Such measurements are well known in the art, are routinely performed using standard beer analysing systems like Anton Paar Alcolyzer device, and thus are readily and easily performable by any person skilled in beer brewing.

The amount of components dissolved in beer can also be expressed as so called specific gravity (relative density) or apparent specific gravity. The first one is measured as density (weight per unit volume) of beer divided by the density of water used as a reference substance, whereas the second one as the weight of a volume of beer to the weight of an equal volume of water. For example, a specific gravity of 1.050 ("50 points") indicates that the substance is 5% heavier than an equal volume of water. The densities of water, and consequently also beer, vary with temperature; therefore for both specific gravity and apparent specific gravity the measurement of the sample and the reference value is done under the same specified temperature and pressure conditions. Pressure is nearly always 1 atm equal to 101.325 kPa, while temperatures may differ depending on the choice of further systems for approximating beer density. Examples of such systems are two empirical scales, Plato and the Brix scale, that are commonly used in brewing and wine industries, respectively. Both scales represent the strength of the solution as percentage of sugar by mass; one degree Plato (abbreviated °P) or one degree Brix (symbol °Bx) is 1 gram of sucrose in 100 grams of water. There is a difference between these units mainly due to both scales being developed for solutions of sucrose at different temperatures, but it is so insignificant that they may be used virtually interchangeably. For example, beer measured at 12° Plato at 15.5°C has the same density as a water-sucrose solution containing 12% sucrose by mass at 15.5°C, which is approximately equal to 12° Brix, being the same density as a water-sucrose solution containing 12% sucrose by mass at 20°C. The Plato and Brix scales have an advantage over specific gravity in that they expresses the density measurement in terms of the amount of fermentable materials, which is particularly useful at early stages of brewing. As, of course, both beer and wort are composed of more solids than just sucrose, it is not exact. The relationship between degrees Plato and specific gravity is not linear, but a good approximation is that 1°P equals 4 "brewer's points" (4 x 0.001); thus 12° Plato corresponds to specific gravity of 1.048 [1+(12 x 4 x .001)].

The term *"original gravity"* or *"original extract"* refers to specific gravity as measured before fermentation, whereas the term *"final gravity"* or *"final extract"* relates to specific gravity measured at the completion of fermentation. In general, gravity refers to the specific gravity of the beer at various stages in its fermentation. Initially, before alcohol production by the yeast, the specific gravity of wort (i.e. the ground malt before beer fermentation) is mostly dependent on the amount of sucrose. Therefore, the original gravity reading at the beginning of the fermentation can be used to determine sugar content in Plato or Brix scales. As fermentation progresses, the yeast convert sugars to carbon dioxide, ethanol, yeast biomass, and flavour components. The lowering of the sugar amount and the increasing presence of ethanol, which has appreciably lesser density than water, both contribute to lowering of the specific gravity of the fermenting beer. Original gravity reading compared to final gravity reading can be used to estimate the amount of sugar consumed and thus the amount of ethanol produced. For example, for a regular beer, original gravity could be 1.050 and final gravity could be 1.010. Similarly, knowing original gravity of a beverage and its alcohol amount can be used to estimate the amount of sugars consumed during the fermentation. The degree to which sugar has been fermented into alcohol is expressed with the term *"real degree of fermentation"* or "RDF", and is often given as a fraction of original gravity transformed into ethanol and CO₂. The RDF of beer is in theory indicative of its sweetness as beers usually have more residual sugar and thus lower RDF.

Concentration steps may involve any of the variety of techniques recognised in the art, which allow partial or substantial separation of water from the beer and thus retention of most of the dissolved therein components in a lower than initial volume. Many of the techniques currently used within the beverage industry rely on the so called membrane technologies, which provide a cheaper alternative to conventional heat-treatment processes and involve separation of substances into two fractions with the help of a semipermeable membrane. The faction comprising particles smaller than the membrane pore size passes through the membrane and, as used herein is referred to as *"permeate"* or *"filtrate".* Everything else retained on the feed side of the membrane as used herein is referred to as *"retentate".*

Typical membrane filtration systems include for example pressure-driven techniques microfiltration, ultrafiltration, nanofiltration and reverse osmosis. As used herein, the term *"microfiltration"* refers to a membrane filtration technique for the retention of particles having size of 0.1 to 10 µm and larger. Usually, microfiltration is a low-pressure process, typically operating at pressures ranging from 0.34 - 3 bar¹. Microfiltration allows separation of particles such as yeast, protozoa, large bacteria, organic and inorganic sediments etc. Then, as used herein, the term *"ultrafiltration"* designates a membrane filtration technique for the retention of particles having size of about 0.01 µm and larger. Ultrafiltration usually retains particles having molecular weight greater than 1000 Dalton, such as most viruses, proteins of certain sizes, nucleic acids, dextrins, pentosan chains ect. Typical operating pressures for ultrafiltration range from 0.48 - 10 bar. Further, as used herein the term *"nanofiltration"* shall be understood as a membrane filtration technique for the retention of particles having size of 0.001 µm to 0.01 µm and larger. Nanofiltration is capable of retaining divalent or multivalent ions, such as divalent salts, and most organic compounds larger than appox. 180 Dalton, which include oligosaccharides and many flavour compounds; while allowing water, ethanol, monovalent ions, and some organic molecules such as many aromatic esters pass through. Operating pressures of 8 - 41 bar are typical for nanofiltration. Where nanofiltration is operated under inlet pressure within the upper end of this range, from 18 bar above, as used herein, it shall be termed *"high pressure nanofiltration".* Lastly, as used herein the term *"reverse osmosis"* shall be understood as referring to a high-pressure membrane process where the applied pressure is used to overcome osmotic pressure. Reverse osmosis usually allows to retain particles having size of 0.00005 µm to 0.0001 µm and larger, i.e. almost all particles and ionic ¹ Wherein the unit bar equals 100,000 Pa, in accordance with the definition of IUPAC, [1 Pa = 1 N/m^2 = 1 kg/m*s^2 in SI units.] species. Substances with molecular weight above 50 Dalton are retained almost without exception. Operating pressures are typically between 21 and 76 bar, but may reach up to 150 bar in specific applications.

Further, as used herein the term *"volatile flavour components"* shall be understood as any of the substances comprised in beer that contribute to its complex olfactory profile, said substances by their chemical nature having a boiling point lower than that of water. Examples of volatile beer flavour components include but are not limited to acetaldehyde, N-propanol, ethyl acetate, isobutyl alcohol, isoamyl alcohol, isoamyl acetate, ethyl hexanoate, ethyl octanoate, phenylethyl alcohol, 2-methyl-1-butanol and many more.

### DETAILED DESCRIPTION OF THE INVENTION

The present invention concerns a method for the production of a beer or cider concentrate, said method comprising the steps of:
a) feeding a beer or cider (1) stream to a first concentration step comprising reverse osmosis (A) to obtain a alcohol retentate (2) and a permeate (3) comprising alcohol and volatile flavour components, wherein the retentate (2) is characterised by the concentration of unfilterable compounds equal to or higher than 5% (w/w), preferably 10% (w/w), most preferably 15% (w/w), as calculated from density measurement corrected for the alcohol amount;
b) Subjecting the retentate (2) to a retentate concentration step (RC) comprising nanofiltration to obtain a concentrated retentate (4) and a permeate (5) comprising alcohol and volatile flavour components.

In general, beer (1) subjected to reverse osmosis (A) according to the invention is preferably clear beer that was treated using any regular beer clarification technique to remove yeast and most of the other particles above 0.2 µm in diameter. Such techniques are standard and well known in the art of beer preparation. For example, they include centrifugation, filtration through e.g. kieselguhr (diatomaceous earth) optionally preceded by centrifugation, or other types of standard microfiltration techniques.

As can be appreciated from the present disclosure, the method of the invention is particularly advantageous for obtaining low-volume high-density beer or cider concentrates with limited or ideally no loss of volatile flavour components. The degree of concentration of the final product largely depends on the degree of concentration of the retentate obtained via nanofiltration in step B). Therefore, the present invention provides a method wherein the retentate not only comprises majority of beer (or cider) flavour components but also can potentially be characterised by a high concentration factor of 5, 10, 15, or even 20 or higher.

A used herein the term *"concentration factor"* shall be understood as the ratio of the beer or cider volume subjected to nanofiltration or reverse osmosis in step A) to the volume of the obtained retentate at the end of the nanofiltration or reverse osmosis in step a), i.e. the ration of the feed volume to the volume of the retentate obtained in the step a) of the method of the present invention. In an particularly preferred embodiment, a method in accordance with the previous embodiments is provided, wherein the retentate obtained in step a) is characterised by concentration factor of 5 or higher, preferably 10 or higher, more preferably 15 or higher, most preferably 20 or higher. A relationship between the concentration factor within the above-defined meaning, and the concentration of unfilterable compounds possible to be obtained in the retentate from step a) naturally depends on the type of beer or cider initially subjected to nanofiltration or reverse osmosis, which is shown and can be appreciated from in the graph presented in Figure 2, wherein each line represents a different beverage (lines 1-4 were obtained for different beers, line 5 obtained for cider)

Concentration factors of 10 and above can advantageously, in terms of speed and performance, be obtained by, as used herein, a high-pressure nanofiltration, i.e. a nanofiltration conducted under a pressure of minimum 18 bar. Thus, in preferred embodiments of the invention, a method is provided wherein the nanofiltration in step a) is a high-pressure nanofiltration, defined as nanofiltration conducted under a pressure in the range of about 18-41 bar, preferably in the range of about 20-35 bar, most preferably about 30 bar.

In case of cross-flow filtration we can always achieve the concentration one pass. But to make the operation more economical multi stages operation is done.

In line with the above, the present invention is based on the finding that by concentrating the beer in a first concentration step comprising reverse osmosis, allows limiting the loss of volatile flavour components, however at the cost of concentration capacity. In view of nanofiltration or ultrafiltration, the maximum concentration factor that can be achieved by concentrating beer with reverse osmosis is limited. By subsequently performing a nanofiltration such as high-pressure nanofiltration on the retentate of the reverse osmosis, a further concentration of the beer can be achieved. Further high-pressure nanofiltration provides concentration potential substantially superior to the one of ultrafiltration or reverse osmosis, potentially allowing to obtain retentate of density comprised between 20-50°P or higher even after a single filtration pass. In an advantageously economical embodiment, nanofiltration is performed as a multi-stage operation, wherein the retentate is progressing from one stage to the next one while becoming more and more concentrated. The preferred final density value of the retentate obtainable according to step a) of the present invention is comprised between 30-80 °P or higher, preferably between 50-70 °P, most preferably about 60 °P. Therefore, in one advantageous embodiment of the invention, the retentate from step a) is obtained in a single pass of nanofiltration, preferably being high-pressure nanofiltration, more preferably high-pressure nanofiltration conducted under a pressure range comprised between 18-35 bar, most preferably between about 20-30 bar.

It has been observed that such high concentration potential can particularly be achieved using polymeric spiral membranes in range of 150-200 Daltons or similar. Examples of such membranes include thin film composite ATF (alternating tangential filtration, Refine Technology) membranes such as the ones currently available from DOW and Parker Domnick Hunter.

After the nanofiltration step, the highly concentrated retentate (4) is collected while the aqueous permeate is either recirculated to the feed of the reverse osmosis or is processed by either distillation, freeze concentration or adsorption in order to selectively retrieve volatile flavour components and optionally ethanol.

The permeate of the first concentration step by reverse osmosis is preferably processed by either distillation, freeze concentration or adsorption in order to selectively retrieve volatile flavour components and optionally ethanol. In case the permeate of the nanofiltration step is processed by distillation, freeze concentration or adsorption, this permeate can be processed together with the permeate of the first concentration step.

Figure 1 schematically illustrates a scheme of the method according to the present invention wherein a beer (1) is subjected to a first concentration step comprising reverse osmosis (semi-permeable membrane acting as physical barrier to passage of most beer components of mean molecular weight (MW) > 50 Da) to obtain a retentate (2) comprising concentrated extract of the beer and a permeate (3) mainly comprising water and ethanol, yet also comprising a small amount of volatile flavour components and potentially some extract. The retentate is subsequently fed to a nanofiltration membrane (semi-permeable membrane acting as physical barrier to passage of most beer components of mean molecular weight (MW) > 150-200 Da). This nanofiltration allows a further concentration of the retentate (2) obtained by the reverse osmosis but at a cost of slightly higher losses of volatile flavour components. To limit these losses, the present invention provides for a recirculation of the nanofiltration permeate (5) to the feed of the first concentration step and/or a downstream processing of the permeate (5) to selectively recover volatile flavour components and optionally alcohol.

The downstream processing of the permeate (5) can be combined with a downstream processing of the permeate from the first concentration step (A) or can be performed in parallel therewith. For both permeates the downstream processing may comprise a second concentration step (B) comprising either distillation, freeze concentration (Freeze concentration essentially concerns the removal of pure water in the form of ice crystals at sub zero temperatures) or adsorption processes adsorption of the volatile flavour components on a column and subsequent elution of the volatile flavour components with water or ethanol).

Distillation is a classic example of a fractionation technique known to be particularly suited for separating alcohol and volatile component from water. The term *"distillation"* as used herein refers to the separation of the liquid mixture into the components thereof by utilising the difference in relative volatility and/or boiling point among the components by inducing their successive evaporation and condensation in the process of heating and cooling. Examples of the distillation may include simple distillation, fractional distillation, multistage distillation, azeotropic distillation, and steam distillation. In a preferred embodiment, a method of the invention is provided wherein the concentration in step b) comprises aromatic distillation, said distillation defined as distillation configured to ensure high retrieval of aroma-producing compounds. Figure 2 shows a specific embodiment of the general method according to the invention, wherein the second concentration (B) is performed by fractional distillation, as schematically illustrated by the presence of fractionating column.

Distillation forms part of a larger group of separation processes based on phase transition, collectively termed as *"fractionation".* Other examples of fractionation comprise column chromatography that is based on difference in affinity between stationary phase and the mobile phase, and fractional crystallization and fractional freezing both utilising the difference in crystallisation or melting points of different components of a mixture at a given temperature. In an advantageous arrangement of the present invention, method b) may comprise such fractionation, preferably distillation, arrangement, wherein different fractions are analysed for the presence of different components such as different volatile flavour component species and then selectively directed for pooling with the retentate from step a) or discarded, which would provide greater control over aroma profile of the final beer concentrate of the invention.

In case the second concentration step (B) comprises distillation the top fraction (7) comprising alcohol and volatile flavour components can be further subjected to an adsorption process (C) to selectively retrieve volatile flavour components (8). This fraction of volatile flavour components (8) can be entirely or partially mixed with the retentate (4) of the nanofiltration step RC) to obtain a beer concentrate or can be used an ingredient for beer, as a component in beer reconstitution or as a flavour component to be added to a beer or cider. When used as a component in beer reconstitution starting from a beer concentrate, the beer concentrate can either be the beer concentrate obtained by the process of the present invention or another beer concentrate.

The bottom fraction of the distillation step (B) (leftover fraction (6)) can be subjected to a freeze concentration process (D) to retrieve potential extract (11) that can be added to the retentate (4) of the nanofiltration or can be used an ingredient for beer, as a component in beer reconstitution or as a flavour component to be added to a beer or cider. When used as a component in beer reconstitution starting from a beer concentrate, the beer concentrate can either be the beer concentrate obtained by the process of the present invention or another beer concentrate.

## Claims

1. A method for preparing beer concentrate, comprising the steps of:
a) Subjecting beer or cider (1) to a first concentration step comprising reverse osmosis to obtain a retentate (2) and a fraction comprising alcohol and volatile flavour components (3), wherein the retentate (2) is **characterised by** the concentration of unfilterable compounds equal to or higher than 5% (w/w), preferably 10% (w/w), most preferably 15% (w/w), as calculated from density measurement corrected for the alcohol amount;
b) Subjecting the retentate (2) to a retentate concentration step comprising nanofiltration to obtain a concentrated retentate (2) and a permeate comprising alcohol and volatile flavour components.

2. The method according to claim 1, comprising recirculating at least part the permeate (4) of the nanofiltration to the feed of the first concentration step.

3. The method according to claim 1 or 2, comprising the steps of:
b) Subjecting the fraction comprising alcohol and volatile flavour components (3) and/or the permeate (5) of the nanofiltration (RC) to a next concentration step (B) comprising freeze concentration, fractionation, preferably being distillation, reverse osmosis or adsorption, to obtain a concentrated fraction comprising volatile flavour components (7) and a leftover fraction (6);

4. The method according to claim 2 or 3, wherein the next concentration step (B) comprises a fractionation process and wherein the leftover fraction (6) is subjected to a freeze concentration (D) process to obtain a concentrated extract fraction (11).

5. The method according to claim 2 or 3, wherein the next concentration step (B) comprises a fractionation process and wherein the concentrated fraction comprising alcohol and volatile flavour components (7) is subjected to an adsorption process (C), adsorbing at least part of the volatile flavour components from the fraction and subsequently eluting the adsorbed volatile flavour components in a volume of water or ethanol to obtain a concentrated fraction of volatile flavour components (8).

6. The method according to any of the preceding claims, comprising adding at least part of the fraction comprising volatile flavour (7) components obtained from process steps B) to the retentate (4) of the nanofiltration step (RC).

7. Use of a fraction comprising volatile flavour components or of a concentrated fraction comprising volatile flavour components obtained by a method as identified in any of claims 1 to 6 as an ingredient for beer or cider, as a component in beer or cider reconstitution or as a flavour component to be added to a beer or cider.
